# EUROPEAN PATENT SPECIFICATION

(11) **EP 3 940 209 B1**
(45) Date of publication and mention of the grant of the patent: **11.12.2024**
(21) Application number: 20770596.3
(22) Date of filing: 11.03.2020
(51) Int. Cl.: F01N 3/04, F01N 3/20, F01N 3/10, B01J 23/34, B01J 21/04, B01J 21/06, B01J 21/16, B01J 23/30, B01J 23/42, B01J 27/053

(54) **SHIP EXHAUST GAS CLEANING APPARATUS AND METHOD**
VORRICHTUNG UND VERFAHREN ZUR REINIGUNG VON ABGASEN EINES SCHIFFES
APPAREIL ET PROCÉDÉ D'ÉPURATION DE GAZ D'ÉCHAPPEMENT DE NAVIRE

(30) Priority: 13.03.2019 KR 20190028477
(43) Date of publication of application: 19.01.2022
(73) Proprietor: Naemsaedduk Co., Ltd., Seongbuk-gu Seoul 02792 (KR); Pine Tree Partners LLC, Yeongdeungpo-gu Seoul 07236 (KR)
(72) Inventor: CHO, Young Sang, Seoul 02489 (KR); KIM, Myung Hun, Seoul 03046 (KR); HWANG, Eui Kun, Seoul 04425 (KR)
(74) Representative: Botti & Ferrari S.p.A.
(86) International application number: PCT/KR2020/003394
(87) International publication number: WO 2020/184980

(56) References cited:
- EP-A1- 2 955 345
- JP-A- 2017 506 716
- KR-A- 20100 020 647
- KR-A- 20110 129 160
- KR-A- 20150 117 974
- KR-A- 20160 084 527
- KR-A- 20170 118 324
- KR-A- 20170 120 656
- US-B2- 9 387 438

## Description

### [Technical Field]

The present specification relates to a ship exhaust gas cleaning apparatus and method, and more particularly, to proposing a method for sequentially removing sulfur dioxide (SO₂) and nitrogen oxides (NOₓ) through a process composed of two steps, in the removal of sulfur dioxide (SO₂) and nitrogen oxides (NOₓ) which are contained in ship exhaust gas, and provides a ship exhaust gas cleaning apparatus and method for maximizing the conversion efficiency of sulfur dioxide (SO₂) into ammonium bisulfate (NH₄HSO₄), thereby being capable of preventing, during the following process of removing nitrogen oxide (NOₓ), sulfur dioxide (SO₂) remaining in ship exhaust gas from lowering nitrogen oxide (NOₓ) removal efficiency.

### [Background Art]

Exhaust gas of a ship engine using a fuel oil with high sulfur content includes carbon dioxide (CO₂), carbon monoxide (CO), sulfur dioxide (SO₂), nitrogen oxide (NOₓ), water vapor (H₂O), oxygen (O₂), nitrogen (N₂), and the like. Among these exhaust materials, especially SO₂ and NOₓ becomes more strictly regulated not to be emitted to the outside of the ship by the International Maritime Organization (IMO). For example, since 2016, regulations have been strengthened to reduce NOₓ emissions from ships sailing in emmission control area (ECA) such as the coast of the United States to 20% or less of the previously permitted emissions. In particular, in the case of SO₂ emission, which is expected to tighten regulations from 2020, when sailing in global water for all ships, exhaust gas should be purified and discharged to be less than the amount of SO₂ emitted when using a fuel oil containing 0.5% or less of sulfur, and when sailing in ECA, exhaust gas should be purified and discharged to be less than the amount of SO₂ emitted when using a fuel oil containing 0.1% or less of sulfur.

Therefore, in particular, it is a very urgent issue to establish the best plan to respond to the SO₂ regulation scheduled from 2020. As a method proposed or developed so far to solve such an issue in the shipping industry, first, there is a method using a low-sulfur fuel oil, as proposed by the IMO. However, if this method is adopted, there is an economic disadvantage that a huge price is added as much as the price difference between a low-sulfur fuel oil and a high-sulfur fuel oil.

Second, there is a method of installing and utilizing a scrubber that dissolves SO₂ contained in the engine exhaust gas with a large amount of water to convert SO₂ into low-concentration sulfurous acid or sulfuric acid and then releasing the same into seawater, or converting into sodium or calcium salt and storing the same and then disposing the same. However, in this method, there is a serious additional economic burden, such as the need for special steel of expensive materials and the need to install a very large-scale scrubber. Also, there are technical difficulties that the stability of the technology is not perfect yet.

Third, SO₂ contained in the ship exhaust gas may be removed using activated carbon. This method is for adsorbing SO₂ to the surface and pores of the activated carbon, but there is a problem in that the adsorption property is lowered at a temperature of 200°C or higher due to the nature of the activated carbon. Also, the activated carbon must be continuously supplied, which is poor in economic feasibility.

Meanwhile, as described above, the ship exhaust gas contains nitrogen oxide (NOₓ) in addition to SO₂, and nitrogen oxide (NOₓ) is usually removed through a SCR (Selective Catalytic Reduction) device. The SCR device uses urea or ammonia (NH₃) as a reducing agent and reduces nitrogen oxide (NOₓ) to N₂ by accelerating the reduction reaction through a SCR catalyst. In operating the SCR device, if an exhaust gas containing both SO₂ and nitrogen oxide (NOₓ) is supplied to the SCR device, ammonium bisulfate (NH₄HSO₄) is generated, and the generated ammonium bisulfate (NH₄HSO₄) is formed in the pores of the SCR catalyst. Ammonium bisulfate (NH₄HSO₄) formed in the pores of the SCR catalyst remains as a liquid up to about 320°C, which weakens the performance of the SCR catalyst.

EP2955345 discloses a ship exhaust gas cleaning apparatus according to the preamble of appended claim 1.

### [Disclosure]

### [Technical Problem]

This disclosure is designed to solve the problem as described above, and the present disclosure is directed to proposing a method for sequentially removing sulfur dioxide (SO₂) and nitrogen oxides (NOₓ) through a process composed of two steps, in the removal of sulfur dioxide (SO₂) and nitrogen oxides (NOₓ) which are contained in ship exhaust gas, and provides a ship exhaust gas cleaning apparatus and method for maximizing the conversion efficiency of sulfur dioxide (SO₂) into ammonium bisulfate (NH₄HSO₄), thereby being capable of preventing, during the following process of removing nitrogen oxide (NOₓ), sulfur dioxide (SO₂) remaining in ship exhaust gas from lowering nitrogen oxide (NOₓ) removal efficiency.

In addition, the present disclosure is directed to providing a ship exhaust gas cleaning apparatus and method capable of improving wet scrubbing efficiency for sulfur (S) components by maximizing the production rate of ammonium bisulfate (NH₄HSO₄), which is a reaction by-product of ammonia (NH₃) and sulfur dioxide (SO₂).

### [Technical Solution]

A ship exhaust gas cleaning apparatus according to an embodiment of the present disclosure to accomplish the above object comprises a sulfur dioxide removal device configured to provide a space for inducing the reaction among ammonia (NH₃), steam (H₂O), oxygen (O₂) and sulfur dioxide (SO₂) and convert sulfur dioxide (SO₂) contained in a ship exhaust gas into ammonium bisulfate (NH₄HSO₄); a wet scrubber configured to remove the ammonium bisulfate (NH₄HSO₄) generated by the sulfur dioxide removal device by dissolving the ammonium bisulfate (NH₄HSO₄) in a feed water; and it is characterized by comprising a SCR device configured to reduce nitrogen oxide (NOₓ) contained in the ship exhaust gas to nitrogen (N₂) for the ship exhaust gas discharged from the sulfur dioxide removal device.

In the sulfur dioxide removal device, an ammonium bisulfate (NH₄HSO₄) production reaction may be activated, and a nitrogen reduction reaction by the reaction of nitrogen oxide (NOₓ) and ammonia (NH₃) may be suppressed.

The temperature inside the sulfur dioxide removal device or the temperature of the ship exhaust gas introduced into the sulfur dioxide removal device may be 150-300°C, more preferably 180-250°C.

Ammonia (NH₃) may be put into the sulfur dioxide removal device in an amount of 1-2 times compared to the molar equivalent of the sulfur dioxide (SO₂) contained in the ship exhaust gas, more preferably in an amount of 1.1-1.6 times compared to the molar equivalent of the sulfur dioxide (SO₂).

An ammonium bisulfate synthesis catalyst may be charged into the sulfur dioxide removal device, and the ammonium bisulfate synthesis catalyst may serve to promote the production of ammonium bisulfate (NH₄HSO₄).

The ammonium bisulfate synthesis catalyst may be any one of an oxidation catalyst, a mixture of oxidation catalyst and solid acid, and a solid acid support of oxidation catalyst, or a mixture thereof. The oxidation catalyst may be any one of MnO₂, V₂O₅, Ni, Pd, and Pt, or a mixture thereof, and the solid acid may be any one selected from the group consisting of basalt, granite, limestone, sandstone, shale, metamorphic rock, kaolinite, attapulgite, bentonite, montmorillonite, zeolite, zinc oxide (ZnO), aluminum oxide (Al₂O₃), titanium oxide (TiO₂), cesium oxide (CeO₂), vanadium oxide (V₂O₅), silicon oxide (SiO₂), chromium oxide (Cr₂O₃), calcium sulfate (CaSO₄), manganese sulfate (MnSO₄), nickel sulfate (NiSO₄), copper sulfate (CuSO₄), cobalt sulfate (CoSO₄), cadmium sulfate (CdSO₄), magnesium sulfate (MgSO₄), iron sulfate II (FeSO₄), aluminum sulfate (Al₂(SO₄)₃), calcium nitrate (Ca(NO₃)₂), zinc nitrate (Zn(NO₃)₂), iron nitrate III (Fe(NO₃)₃), aluminum phosphate (AlPO₄), iron phosphate III (FePO₄), chromium phosphate (CrPO₄), copper phosphate (Cu₃(PO₄)₂), zinc phosphate (Zn₃(PO₄)₄), magnesium phosphate (Mg₃(PO₄)₂), aluminum chloride (AlCl₃), titanium chloride (TiCl₄), calcium chloride (CaCl₂), calcium fluoride (CaF₂), barium fluoride (BaF₂) and calcium carbonate (CaCO₃), or a mixture thereof.

A substance to be dissolved by the wet scrubber may be ammonium bisulfate (NH₄HSO₄), and the feed water put into the wet scrubber may be in an amount of 100-2,000 times compared to the mass of ammonium bisulfate (NH₄HSO₄), and more preferably, the feed water put into the wet scrubber may be in an amount of 300-1,000 times compared to the mass of ammonium bisulfate (NH₄HSO₄).

Ammonia (NH₃) may be put into the SCR device as a reducing agent, and the ammonia (NH₃) may be put into the sulfur dioxide removal device in an amount of 0.7-1.5 times compared to the molar equivalent of nitrogen oxide (NOₓ) contained in the ship exhaust gas.

A ship exhaust gas cleaning method according to an embodiment of the present disclosure is characterized in comprising: a sulfur dioxide removing step of converting sulfur dioxide (SO₂) contained in a ship exhaust gas into ammonium bisulfate (NH₄HSO₄) by the reaction among sulfur dioxide (SO₂), steam (H₂O), oxygen (O₂) and ammonia (NH₃); and an ammonium bisulfate removing step of removing the ammonium bisulfate (NH₄HSO₄) by dissolving the ammonium bisulfate (NH₄HSO₄) in a feed water; wherein a nitrogen oxide removing step is performed between the sulfur dioxide removing step and the ammonium bisulfate removing step, and the nitrogen oxide removing step further includes a nitrogen oxide removing step of removing the nitrogen oxide (NOₓ) contained in the ship exhaust gas by reducing the nitrogen oxide (NOₓ) to nitrogen (N₂).

In the sulfur dioxide removing step, a condition of controlling the temperature of the ship exhaust gas to 150-300°C, a condition of putting ammonia (NH₃) in an amount of 1-2 times compared to the molar equivalent of the sulfur dioxide (SO₂) contained in the ship exhaust gas, and a condition of charging an ammonium bisulfate synthesis catalyst may be applied selectively or in combination to maximize ammonium bisulfate (NH₄HSO₄) synthesis efficiency.

In the ammonium bisulfate removing step, the feed water may be put in an amount of 100-2,000 times compared to the mass of ammonium bisulfate (NH₄HSO₄) to dissolve the ammonium bisulfate (NH₄HSO₄).

The nitrogen oxide removing step may be carried out by a SCR device, and a condition of controlling the temperature of the ship exhaust gas or the temperature of the inside of the SCR device to 200-450°C and a condition of putting ammonia (NH₃) in an amount of 0.7-1.5 times compared to the molar equivalent of nitrogen oxide (NOₓ) contained in the ship exhaust gas may be applied selectively or in combination.

In addition, in the sulfur dioxide removing step, ammonia (NH₃) in an amount of 1-2 times compared to the molar equivalent of sulfur dioxide (SO₂) contained in the ship exhaust gas and ammonia (NH₃) in an amount of 0.7-1.5 times compared to the molar equivalent of nitrogen oxide (NOₓ) contained in the ship exhaust gas may be put into a sulfur dioxide removal device.

### [Advantageous Effects]

The ship exhaust gas cleaning apparatus and method according to one aspect of the present disclosure has the following effects.

In removing sulfur dioxide (SO₂) contained in the ship exhaust gas, ammonium bisulfate (NH₄HSO₄) is generated by inducing a reaction among sulfur dioxide (SO₂), steam(H₂O), oxygen(O₂) and ammonia (NH₃), and ammonium bisulfate (NH₄HSO₄) is removed through a wet scrubbing process, thereby completely removing sulfur dioxide (SO₂) in the ship exhaust gas. In addition, compared to the conventional wet scrubbing process using sulfur dioxide (SO₂) as a material to be dissolved, the amount of feed water used may be reduced to 1/10 or less.

In addition, when a following SCR process is combined, as sulfur dioxide (SO₂) is completely removed by the sulfur dioxide removing process described above, it is fundamentally blocked that ammonium bisulfate (NH₄HSO₄) is generated inside the pores and on the surface of the SCR catalyst, thereby preventing the SCR efficiency from being deteriorated due to ammonium bisulfate (NH₄HSO₄) in a liquid phase.

### [Description of Drawings]

FIG. 1 is a diagram showing a ship exhaust gas cleaning apparatus according to the first embodiment of the present disclosure.
FIG. 2 is a diagram showing a ship exhaust gas cleaning apparatus according to the second embodiment of the present disclosure.
FIG. 3 is a flowchart for illustrating a ship exhaust gas cleaning method according to the first embodiment of the present disclosure.
FIG. 4 is a flowchart for illustrating a ship exhaust gas cleaning method according to the second embodiment of the present disclosure.
FIG. 5 is a diagram showing an experiment device to which Experimental Examples 1 to 5 are applied.

### [Best Mode]

An embodiment of the present disclosure proposes a technology that may effectively remove sulfur dioxide (SO₂) contained in a ship exhaust gas. In addition, an embodiment of the present disclosure proposes a technology capable of removing not only sulfur dioxide (SO₂) but also nitrogen oxide (NOₓ) by combining a nitrogen oxide removing process.

It is difficult to simultaneously remove sulfur dioxide (SO₂) and nitrogen oxide (NOₓ) contained in the ship exhaust gas through one process. Therefore, the sulfur dioxide (SO₂) removing process and the nitrogen oxide (NOₓ) removing process are separately performed, and the sulfur dioxide (SO₂) removing process and the nitrogen oxide (NOₓ) removing process are linked.

In carrying out the sulfur dioxide (SO₂) removing process in conjunction with the nitrogen oxide (NOₓ) removing process, it should be minimized that a gas to be treated in each process is remained in the ship exhaust gas after each process is carried out, and it should be suppressed that the treatment efficiency of a following removing process is deteriorated.

As mentioned in the 'Background Art' section above, if the nitrogen oxide (NOₓ) reduction process is performed by a SCR device in a state where sulfur dioxide (SO₂) remains in the exhaust gas, ammonium bisulfate (NH₄HSO₄) is generated to block pores of the SCR catalyst, which may deteriorate the nitrogen oxide (NOₓ) removal efficiency. In addition, even in the method of removing sulfur dioxide (SO₂) using activated carbon, if sulfur dioxide (SO₂) and nitrogen oxide (NOₓ) are supplied together, the adsorption properties of activated carbon may be deteriorated due to adsorption of ammonium bisulfate (NH₄HSO₄).

An embodiment of the present disclosure proposes a technology for removing sulfur dioxide (SO₂) through the reaction among ammonia (NH₃), steam(H₂O), oxygen(O₂) and sulfur dioxide (SO₂). In addition, an embodiment of the present disclosure induces the production of ammonium bisulfate (NH₄HSO₄) through the reaction among ammonia (NH₃), steam(H₂O), oxygen(O₂) and sulfur dioxide (SO₂) and maximizes the synthesis efficiency of ammonium bisulfate (NH₄HSO₄).

As mentioned in the 'Background Art' section above, ammonia (NH₃) is generally used as a reducing agent in the nitrogen oxide (NOₓ) removing process. In an embodiment of the present disclosure, ammonia (NH₃) is applied to the sulfur dioxide (SO₂) removing process.

The reason for applying ammonia (NH₃) to the sulfur dioxide (SO₂) removing process in an embodiment of the present disclosure is to induce the production of ammonium bisulfate (NH₄HSO₄) along with the removal of sulfur dioxide (SO₂) through the reaction among ammonia (NH₃), steam(H₂O), oxygen(O₂) and sulfur dioxide (SO₂). In addition, it is to maximize the synthesis efficiency of ammonium bisulfate (NH₄HSO₄) and to minimize the sulfur dioxide (SO₂) remaining in the ship exhaust gas by removing ammonium bisulfate (NH₄HSO₄) component by means of wet scrubbing. As the residual sulfur dioxide (SO₂) component in the ship exhaust gas is minimized, it is possible to prevent the nitrogen oxide (NOₓ) removal process efficiency from deteriorating due to the sulfur dioxide (SO₂) component.

Along with this, an embodiment of the present disclosure proposes a technology capable of improving the wet scrubbing efficiency for sulfur (S) components compared to the prior art. In the conventional wet scrubbing process for desulfurization, the wet scrubbing process is carried out for sulfur dioxide (SO₂), but in an embodiment of the present disclosure, the wet scrubbing process is performed not for sulfur dioxide (SO₂) but for ammonium bisulfate (NH₄HSO₄). Ammonium bisulfate (NH₄HSO₄) has higher solubility than sulfur dioxide (SO₂), so the wet scrubbing process may be performed using a relatively small amount of water (or seawater).

Hereinafter, a ship exhaust gas cleaning apparatus and method according to the first and second embodiments of the present disclosure will be described in detail with reference to the drawings. The first embodiment relates to purifying sulfur dioxide (SO₂) contained in the ship exhaust gas, and the second embodiment relates to sequentially purifying sulfur dioxide (SO₂) and nitrogen oxide (NOₓ) contained in the ship exhaust gas.

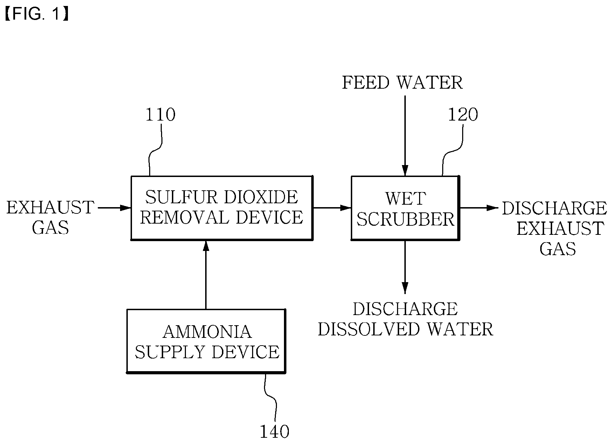

Referring to FIG. 1, the ship exhaust gas cleaning apparatus according to the first embodiment of the present disclosure includes a sulfur dioxide removal device 110 and a wet scrubber 120.

The sulfur dioxide (SO₂) contained in the ship exhaust gas is purified while passing through the sulfur dioxide removal device 110 and the wet scrubber 120 sequentially. The sulfur dioxide (SO₂) contained in the ship exhaust gas is converted into ammonium bisulfate (NH₄HSO₄) by the sulfur dioxide removal device 110, and the wet scrubber 120 removes the ammonium bisulfate (NH₄HSO₄) produced by the sulfur dioxide removal device 110 by dissolving the ammonium bisulfate (NH₄HSO₄).

The sulfur dioxide removal device 110 provides a space to induce the reaction among ammonia (NH₃), steam(H₂O), oxygen(O₂) and sulfur dioxide (SO₂). The ship exhaust gas is introduced into the sulfur dioxide removal device 110 from a ship engine, and ammonia (NH₃) is supplied to the sulfur dioxide removal device 110 through a separate ammonia supply device 140.

The sulfur dioxide (SO₂) contained in the ship exhaust gas reacts with ammonia (NH₃), steam(H₂O) and oxygen(O₂) and ammonium bisulfate (NH₄HSO₄) is produced by the reaction of sulfur dioxide (SO₂) and ammonia (NH₃). The reaction of sulfur dioxide (SO₂) and ammonia (NH₃) and the production of ammonium bisulfate (NH₄HSO₄) by the reaction of sulfur dioxide (SO₂) and ammonia (NH₃) are explained through the reaction of Equations 1 and 2 below. In the reaction of Equations 1 and 2, the reaction of SO₂ and O₂ is promoted at a low temperature of 300°C or below, and finally ammonium bisulfate (NH₄HSO₄) is produced by the reaction of SO₃, H₂O and NH₃.

(Equation 1) 2SO₂ + O₂ → 2SO₃

(Equation 2) SO₃ + H₂O + NH₃ --+ NH₄HSO₄

(Equation 3) 2NO + O₂ → 2NO₂

(Equation 4) NO + NO₂ + NH₃ → 2N₂ + 3H₂O

Meanwhile, in the sulfur dioxide removal device 110, in addition to the ammonium bisulfate (NH₄HSO₄) production reaction (see Equations 1 to 3), the reaction of nitrogen oxide (NOₓ) contained in the ship exhaust gas and NH₃ may occur by adding NH₃ (see Equations 3 and 4). That is, in the sulfur dioxide removal device 110, the ammonium bisulfate (NH₄HSO₄) production reaction by Equations 1 and 2 and the reaction of nitrogen oxide (NOₓ) and NH₃ by Equation 4 may be performed together.

As such, in the sulfur dioxide removal device 110, the ammonium bisulfate (NH₄HSO₄) production reaction and the nitrogen reduction reaction by the reaction of nitrogen oxide (NOₓ) and NH₃ may occur simultaneously, and in an embodiment of the present disclosure, the ammonium bisulfate (NH₄HSO₄) production reaction is activated and the reaction between nitrogen oxide (NOₓ) and NH₃ is suppressed. The reason is that, if the reaction between nitrogen oxide (NOₓ) and NH₃ is performed, the nitrogen oxide (NOₓ) contained in the ship exhaust gas may be partially removed, but the sulfur dioxide (SO₂) removal efficiency is deteriorated as the ammonium bisulfate (NH₄HSO₄) production reaction is relatively inactivated. In addition, in an embodiment of the present disclosure, a method of maximizing the production of ammonium bisulfate (NH₄HSO₄) through the reaction of ammonia (NH₃) and sulfur dioxide (SO₂) and removing the generated ammonium bisulfate (NH₄HSO₄) through a following wet scrubbing process is applied. However, if the ammonium bisulfate (NH₄HSO₄) production reaction is relatively inactive, it is difficult to completely remove the sulfur (S) component of the ship exhaust gas.

By controlling the reaction temperature, it is possible to maximize the ammonium bisulfate (NH₄HSO₄) production reaction (see Equations 1 and 2) and to minimize the nitrogen reduction reaction (see Equations 3 and 4) by the reaction of nitrogen oxide (NOₓ) and NH₃. In other words, it is possible to maximize the ammonium bisulfate (NH₄HSO₄) production reaction and minimize the nitrogen reduction reaction by the reaction of nitrogen oxide (NOₓ) and NH₃ by controlling the temperature in the sulfur dioxide removal device 110 or the temperature of the ship exhaust gas. This is because the ammonium bisulfate (NH₄HSO₄) production reaction (see Equations 1 to 3) is carried out at a relatively low temperature and the nitrogen reduction reaction (see Equations 3 and 4) by the reaction of nitrogen oxide (NOₓ) and NH₃ is carried at a relatively high temperature.

The ammonium bisulfate (NH₄HSO₄) production reaction occurs predominantly at 150-300°C, and if the temperature in the sulfur dioxide removal device 110 or the temperature of the ship exhaust gas exceeds 300°C, the nitrogen reduction reaction occurs by the reaction of nitrogen oxide (NOₓ) and NH₃. In consideration of this, the temperature in the sulfur dioxide removal device 110 or the temperature of the ship exhaust gas is preferably adjusted to 150-300°C, more preferably 180-250°C. If the temperature in the sulfur dioxide removal device 110 or the temperature of the ship exhaust gas is lower than 180°C, the generated ammonium bisulfate (NH₄HSO₄) may be liquefied, and if the temperature in the sulfur dioxide removal device 110 or the temperature of the ship exhaust gas exceeds 250°C, the ammonium bisulfate (NH₄HSO₄) synthesis efficiency may be rapidly deteriorated. Considering that the temperature of the exhaust gas discharged through a turbo charger of the ship engine is about 220°C, the ammonium bisulfate (NH₄HSO₄) production reaction may be maximized without additional temperature control after the ship exhaust gas is introduced into the sulfur dioxide removal device 110.

Meanwhile, in order to increase the ammonium bisulfate (NH₄HSO₄) synthesis efficiency, it is required to control the amount of put ammonia (NH₃) together with the temperature control as described above. Specifically, it is required to put ammonia (NH₃) in an amount of 1-2 times compared to the molar equivalent of sulfur dioxide (SO₂) contained in the ship exhaust gas. As a more preferable condition, it is required to put ammonia (NH₃) in an amount of 1.1-1.6 times compared to the molar equivalent of sulfur dioxide (SO₂) contained in the ship exhaust gas. Here, if the amount of ammonia (NH₃) is less than 1.1 times compared to the molar equivalent of sulfur dioxide (SO₂), the ammonium bisulfate (NH₄HSO₄) synthesis efficiency is deteriorated, and if the amount of ammonia (NH₃) is greater than 1.6 times compared to the molar equivalent of sulfur dioxide (SO₂), ammonia (NH₃) is more likely to be lost.

As another method to increase the ammonium bisulfate (NH₄HSO₄) synthesis efficiency, an ammonium bisulfate synthesis catalyst may be used. The ammonium bisulfate synthesis catalyst serves to promote the production of ammonium bisulfate (NH₄HSO₄), and may be optionally charged into the sulfur dioxide removal device 110.

The ammonium bisulfate synthesis catalyst may employ any one of an oxidation catalyst, a mixture of oxidation catalyst and solid acid, and a solid acid support of oxidation catalyst, or a mixture thereof. The oxidation catalyst may be any one of MnO₂, V₂O₅, Ni, Pd, and Pt, or a mixture thereof. In addition, the solid acid may be any one selected from the group consisting of basalt, granite, limestone, sandstone, shale, metamorphic rock, kaolinite, attapulgite, bentonite, montmorillonite, zeolite, zinc oxide (ZnO), aluminum oxide (Al₂O₃), titanium oxide (TiO₂), cesium oxide (CeO₂), vanadium oxide (V₂O₅), silicon oxide (SiO₂), chromium oxide (Cr2O₃), calcium sulfate (CaSO₄), manganese sulfate (MnSO₄), nickel sulfate (NiSO₄), copper sulfate (CuSO₄), cobalt sulfate (CoSO₄), cadmium sulfate (CdSO₄), magnesium sulfate (MgSO₄), iron sulfate II (FeSO₄), aluminum sulfate (Al₂(SO₄)₃), calcium nitrate (Ca(NO₃)₂), zinc nitrate (Zn(NO₃)₂), iron nitrate III (Fe(NO₃)₃), aluminum phosphate (AlPO₄), iron phosphate III (FePO₄), chromium phosphate (CrPO₄), copper phosphate (Cu₃(PO₄)₂), zinc phosphate (Zn₃(PO₄)₄), magnesium phosphate (Mg₃(PO₄)₂), aluminum chloride (AlCl₃), titanium chloride (TiCl₄), calcium chloride (CaCl₂), calcium fluoride (CaF₂), barium fluoride (BaF₂) and calcium carbonate (CaCO₃), or a mixture thereof.

Heretofore, the sulfur dioxide removal device 110 and its operating conditions have been described. Next, the wet scrubber 120 will be described. The wet scrubber 120 is a device that applies a wet scrubbing process to the ship exhaust gas treated by the sulfur dioxide removal device 110.

The sulfur dioxide (SO₂) contained in the ship exhaust gas is converted to ammonium bisulfate (NH₄HSO₄) by the sulfur dioxide removal device 110, and the wet scrubber 120 plays a role of removing the ammonium bisulfate (NH₄HSO₄) by dissolving the ammonium bisulfate (NH₄HSO₄) contained in the ship exhaust gas in a feed water and discharging the same. As the feed water, water or seawater may be used, and the feed water in which ammonium bisulfate (NH₄HSO₄) is dissolved, namely a dissolved water, may be moved to a dissolved water storage tank provided at one side of the ship or discharged to the sea.

In the wet scrubber 120 according to an embodiment of the present disclosure, a substance to be dissolved is ammonium bisulfate (NH₄HSO₄). Whereas a substance to be dissolved in the wet scrubber 120 for desulfurization of the ship exhaust gas is generally sulfur dioxide (SO₂), the present disclosure is characterized in that a substance to be dissolved in the wet scrubber 120 according to an embodiment of the present disclosure is not sulfur dioxide (SO₂) but ammonium bisulfate (NH₄HSO₄). As the substance to be dissolved in the wet scrubber 120 is ammonium bisulfate (NH₄HSO₄), the amount of feed water required for the wet scrubber 120 may be significantly reduced. This is due to the difference in solubility between sulfur dioxide (SO₂) and ammonium bisulfate (NH₄HSO₄). Based on water, the solubility of sulfur dioxide (SO₂) is about 10.5 g/100 g, whereas the solubility of ammonium bisulfate (NH₄HSO₄) is about 115 g/100 g, which is about 10 times different. In addition, while sulfur dioxide (SO₂) requires water at a relatively low temperature to increase solubility, ammonium bisulfate (NH₄HSO₄) has a property of increasing solubility in water as the temperature increases. Therefore, when performing the wet scrubbing process for ammonium bisulfate (NH₄HSO₄), the wet scrubbing process may be performed using a feed water in an amount of 1/10 or less compared to the sulfur dioxide (SO₂) wet scrubbing process, so the amount of used feed water may be drastically reduced. Considering that ammonium bisulfate (NH₄HSO₄) in a gas state needs to be dissolved, it is preferable that water or seawater put into the wet scrubber 120 is in an amount of 100-2,000 times, preferably 300-1,000 times, compared to the mass of ammonium bisulfate (NH₄HSO₄).

Heretofore, the ship exhaust gas cleaning apparatus according to the first embodiment of the present disclosure has been described. As described above, the first embodiment of the present disclosure is a technology for purifying sulfur dioxide (SO₂) contained in the ship exhaust gas. The second embodiment of the present disclosure relates to a technology for purifying not only sulfur dioxide (SO₂) but also nitrogen oxide (NO₂).

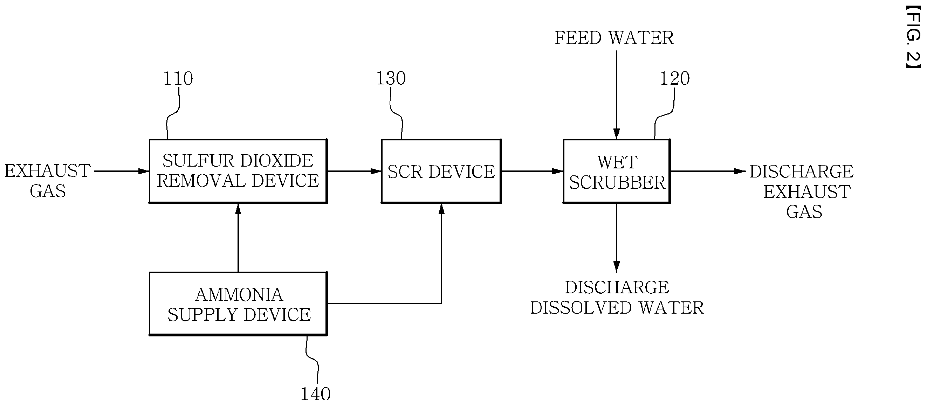

The ship exhaust gas cleaning apparatus according to the second embodiment of the present disclosure further includes a SCR device 130 in addition to the components of the first embodiment in order to purify not only sulfur dioxide (SO₂) but also nitrogen oxide (NO₂), as shown in FIG. 2. In the second embodiment of the present disclosure, the configuration and functions of the sulfur dioxide removal device 110 and the wet scrubber 120 are the same as in the first embodiment.

The SCR device 130 is a device that reduces and removes nitrogen oxide (NOₓ) contained in the ship exhaust gas for the ship exhaust gas discharged from the sulfur dioxide removal device 110. Specifically, if the reducing agent is added to the SCR device 130 in a state where the ship exhaust gas is supplied to the SCR device 130 equipped with the SCR catalyst, nitrogen oxide (NOₓ) reacts with the reducing agent and is reduced to nitrogen (N₂). The SCR catalyst promotes the reaction of nitrogen oxide (NOₓ) and the reducing agent.

As the reducing agent, ammonia (NH₃) may be used, and it is preferable that ammonia (NH₃) is put in an amount of 0.7-1.5 times compared to the molar equivalent of nitrogen oxide (NOₓ) contained in the ship exhaust gas. As a more preferable condition, it is required to putting ammonia (NH₃) into the SCR device 130 in an amount of 0.9-1.2 times compared to the molar equivalent of nitrogen oxide (NOₓ) contained in the ship exhaust gas. Here, if the amount of ammonia (NH₃) is less than 0.9 times compared to the molar equivalent of nitrogen oxide (NOₓ), the nitrogen oxide (NOₓ) removal rate may be drastically reduced, and if the amount of ammonia (NH₃) is greater than 1.2 times compared to the molar equivalent of nitrogen oxide (NOₓ), ammonia (NH₃) is more likely to be lost.

The ammonia (NH₃) used as a reducing agent for the SCR reaction may be directly supplied to the SCR device 130 or may be supplied to the sulfur dioxide removal device 110. Referring to the first embodiment, it is specified that ammonia (NH₃) in an amount of 1-2 times compared to the molar equivalent of sulfur dioxide (SO₂) contained in the ship exhaust gas is put into the sulfur dioxide removal device 110. However, if the SCR device 130 is added as in the second embodiment, ammonia (NH₃) in an amount of 0.7-1.5 times compared to the molar equivalent of nitrogen oxide (NOₓ) contained in the ship exhaust gas may be additionally put into the sulfur dioxide removal device 130. That is, if the sulfur dioxide removal device 110 and the SCR device 130 are provided as in the second embodiment, ammonia (NH₃) in an amount of 1-2 times compared to the molar equivalent of sulfur dioxide (SO₂) and ammonia (NH₃) in an amount of 0.7-1.5 times compared to the molar equivalent of nitrogen oxide (NOₓ) contained in the ship exhaust gas may be put into the sulfur dioxide removal device 110. In another embodiment, it is also possible that ammonia (NH₃) in an amount of 1-2 times compared to the molar equivalent of sulfur dioxide (SO₂) is put into the sulfur dioxide removal device 110, and ammonia (NH₃) in an amount of 0.7-1.5 times compared to the molar equivalent of nitrogen oxide (NOₓ) contained in the ship exhaust gas is put into the SCR device 130.

For the SCR reaction (selective catalytic reduction reaction) in the SCR device 130, it is necessary to adjust the temperature of the ship exhaust gas to 200-450°C. More preferably, it is necessary to adjust the temperature of the ship exhaust gas introduced into the SCR device 130 to 300-400°C. If the temperature of the ship exhaust gas is lower than 300°C, there is a possibility that the SCR reaction efficiency may decrease, and if the temperature of the ship exhaust gas exceeds 400°C, there is a disadvantage that the energy cost is increased.

Meanwhile, in the 'Background Art' section above, it is mentioned that if the ship exhaust gas is supplied to the SCR device in a state where both sulfur dioxide (SO₂) and nitrogen oxide (NOₓ) are contained therein, ammonium bisulfate (NH₄HSO₄) is produced, and the produced ammonium bisulfate (NH₄HSO₄) is adsorbed to the pores of the SCR catalyst. The phenomenon that ammonium bisulfate (NH₄HSO₄) is adsorbed to the pores of the SCR catalyst to block the pores is caused by the formation of ammonium bisulfate (NH₄HSO₄) inside the SCR device.

As in an embodiment of the present disclosure, if sulfur dioxide (SO₂) is converted to ammonium bisulfate (NH₄HSO₄) gas by the sulfur dioxide removal device 110, since the ammonium bisulfate (NH₄HSO₄) gas is larger than the pore size of the SCR catalyst, the ammonium bisulfate (NH₄HSO₄) gas passes through the SCR device 130 without being adsorbed to the pores of the SCR catalyst.

Therefore, the ship exhaust gas discharged from the SCR device 130 comes into a state where nitrogen oxide (NOₓ) is removed and ammonium bisulfate (NH₄HSO₄) gas is contained, and the ship exhaust gas discharged from the SCR device 130, namely the ship exhaust gas containing the ammonium bisulfate (NH₄HSO₄) gas, is supplied to the wet scrubber 120.

The wet scrubber 120 serves to remove ammonium bisulfate (NH₄HSO₄) by dissolving the ammonium bisulfate (NH₄HSO₄) contained in the ship exhaust gas in the feed water and discharging the same as in the first embodiment described above. In addition, as in the first embodiment, in removing ammonium bisulfate (NH₄HSO₄), the amount of feed water used may be reduced to 1/10 or less compared to the wet scrubber 120 for sulfur dioxide, and the amount of feed water put into the wet scrubber 120 is 100-2,000 times compared to the mass of ammonium bisulfate (NH₄HSO₄).

Heretofore, the ship exhaust gas cleaning apparatus and its operation according to the first embodiment and the second embodiment of the present disclosure have been described. In the above description, the operations of the ship exhaust gas cleaning apparatus according to the first embodiment and the second embodiment of the present disclosure correspond to the ship exhaust gas cleaning method according to the first embodiment and the second embodiment of the present disclosure, respectively.

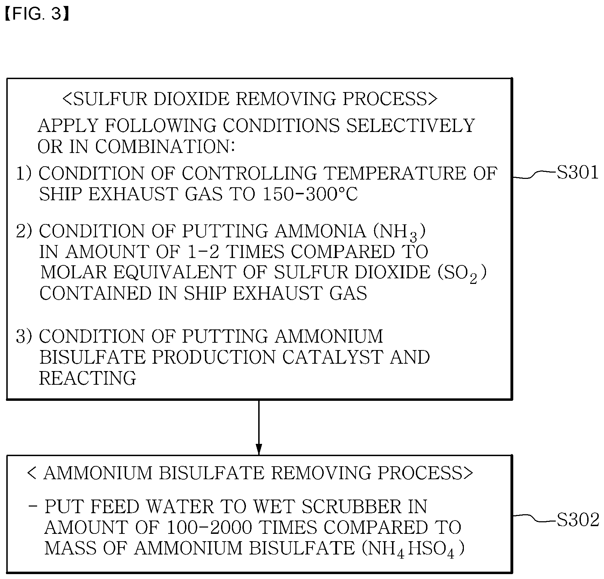

The ship exhaust gas cleaning method according to the first embodiment of the present disclosure is to sequentially perform a sulfur dioxide removing process (S301) and an ammonium bisulfate removing process (S302) as shown in FIG. 3. The sulfur dioxide removing process is carried out by the sulfur dioxide removal device 110, and the ammonium bisulfate removing process is carried out by the wet scrubber 120.

During the sulfur dioxide removing process, it is necessary to maximize the ammonium bisulfate (NH₄HSO₄) synthesis efficiency. For this, a condition of controlling the temperature of the ship exhaust gas to 150-300°C, a condition of putting ammonia (NH₃) in an amount of 1-2 times compared to the molar equivalent of the sulfur dioxide (SO₂) contained in the ship exhaust gas, and a condition of charging an ammonium bisulfate synthesis catalyst to the sulfur dioxide removal device 110 may be applied selectively or in combination.

In addition, in removing ammonium bisulfate (NH₄HSO₄) through the wet scrubber 120, the amount of feed water used may be reduced to 1/10 or less compared to the wet scrubber 120 for sulfur dioxide, and the amount of feed water put into the wet scrubber 120 is 100-2,000 times compared to the mass of ammonium bisulfate (NH₄HSO₄).

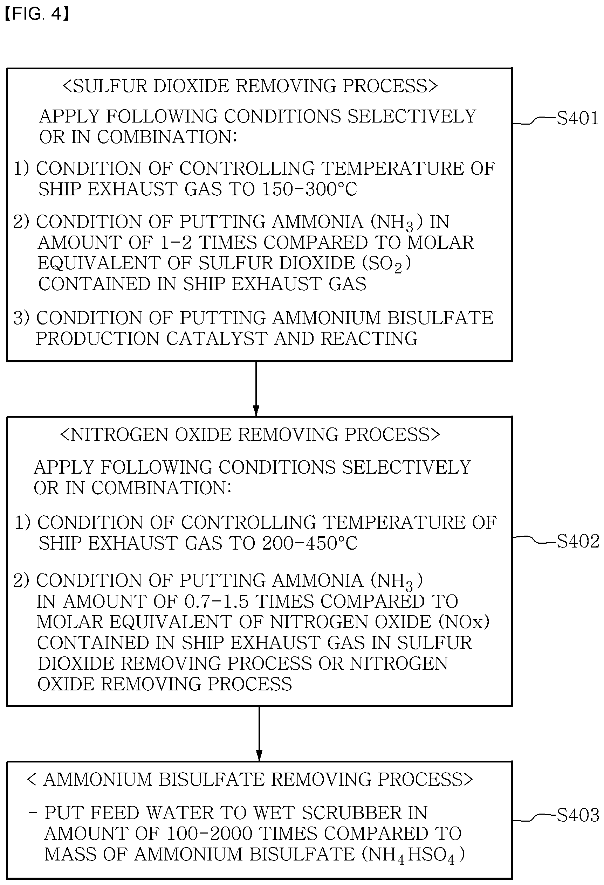

The ship exhaust gas cleaning method according to the second embodiment of the present disclosure is to sequentially perform a sulfur dioxide removing process (S401), a nitrogen oxide removing process (S402), and an ammonium bisulfate removing process (S403) as shown in FIG. 4. The sulfur dioxide removing process is carried out by the sulfur dioxide removal device 110, the nitrogen oxide removing process is carried out by the SCR device 130, and the ammonium bisulfate removing process is carried out by the wet scrubber 120.

During the sulfur dioxide removing process, it is necessary to maximize the ammonium bisulfate (NH₄HSO₄) synthesis efficiency. For this, a condition of controlling the temperature of the ship exhaust gas to 150-300°C, a condition of putting ammonia (NH₃) in an amount of 1-2 times compared to the molar equivalent of the sulfur dioxide (SO₂) contained in the ship exhaust gas, and a condition of putting an ammonium bisulfate synthesis catalyst may be applied selectively or in combination.

During the nitrogen oxide removing process using the SCR device 130, the nitrogen oxide (NOₓ) contained in the ship exhaust gas may be effectively removed by applying a condition of controlling the temperature of the ship exhaust gas to 200-450°C and a condition of putting ammonia (NH₃) in an amount of 0.7-1.5 times compared to the molar equivalent of nitrogen oxide (NOₓ) contained in the ship exhaust gas selectively or in combination. Here, the condition of putting ammonia (NH₃) in an amount of 0.7-1.5 times compared to the molar equivalent of nitrogen oxide (NOₓ) contained in the ship exhaust gas may also be applied to the sulfur dioxide removing process. That is, during the sulfur dioxide removing process, ammonia (NH₃) in an amount of 1-2 times compared to the molar equivalent of sulfur dioxide (SO₂) and ammonia (NH₃) in an amount of 0.7-1.5 times compared to the molar equivalent of nitrogen oxide (NOₓ) contained in the ship exhaust gas may be put into the sulfur dioxide removal device 110.

In addition, in removing ammonium bisulfate (NH₄HSO₄) through the wet scrubber 120, the amount of feed water used may be reduced to 1/10 or less compared to the wet scrubber 120 for sulfur dioxide, and the amount of feed water put into the wet scrubber 120 is 100-2,000 times compared to the mass of ammonium bisulfate (NH₄HSO₄).

### [Mode for Invention]

Heretofore, the ship exhaust gas cleaning apparatus and method according to the first embodiment and the second embodiment of the present disclosure have been described. Hereinafter, the embodiments of the present disclosure will be described in more detail with reference to experimental examples.

### <Experimental Example 1: SO₂ removal efficiency according to the change of temperature>

An experimental device as shown in FIG. 5 was prepared. Under the experimental device of FIG. 5, by adjusting a flow regulator 6, N₂ was supplied from a N₂ (100%) cylinder 1 at a rate of 97mL/min, a NO/SO₂/N₂ mixed gas was supplied from a NO (8%)/SO₂ (5%)/N₂ (87%) mixed gas cylinder 2 at a rate of 1 mL/min rate, and an O₂/N₂ mixed gas was supplied from an O₂ (3%)/N₂ (97%) mixed gas cylinder 3 at a rate of 1 mL/min rate, respectively, and passed through preheaters 7 to be heated to 250°C and then transferred to a first gas mixer 8. At the same time, a distilled water was supplied from a distilled water tank 4 to a flow controller at a rate of 0.3 g/hour, and was heated to 250°C by a preheater 7 and also put into the first gas mixer 8. The mixed gas composed of SO₂, NO, O₂ and water vapor was transferred to a second gas mixer, and was mixed again with NH₃ at 250°C that was preheated and supplied from a NH₃ (NH₃-8%, N₂-92%) cylinder 5 through the flow regulator 6 at a rate of 1 mL/min. The final mixed gas passed through a reactor inlet sample port 9 and was adjusted to a final reaction temperature at a cooler 11 and a reactor furnace 13 (with an inner diameter of 5 cm, an outer diameter of 13 cm, and a length of 42 cm), and was discharged to the outside through a reactor 12 (with an inner diameter of 8 mm, an outer diameter of 10 mm, and a length of 48 cm), a reactor outlet sample port 10 and a gas bubbler 16. Reference numeral 14 in FIG. 5, not described, denotes 0.5 g of alumina in which 0.5 wt% of platinum is supported as an ammonium bisulfate synthesis catalyst, and reference numeral 15 denotes a catalyst support asbestos.

The concentrations of SO₂ and NOₓ in the mixed and reaction gases were collected and measured at both the sample ports installed at the inlet and outlet of the reactor, and the results are summarized in Table 1 below. In Table 1 below, the concentration of each gas in the mixed gas except for water vapor is SO₂ 500 ppm, NO 800 ppm, NH₃ 800 ppm and O₂ 3%, and the amount of water vapor in the total gas is 6%. This composition is similar to the composition of an engine exhaust gas using a fuel oil containing 3.5% sulfur.

**[Table 1]**

| <Change of SO₂ and NOₓ concentrations according to reaction temperature (unit: ppm)> | | | | | | | | |
|---|---|---|---|---|---|---|---|---|
| concentration measuring point | 270°C | | 230°C | | 190°C | | 150°C | |
| | SO₂ | NOₓ | SO₂ | NOₓ | SO₂ | NOₓ | SO₂ | NOₓ |
| mixed gas | 500 | 800 | 500 | 800 | 500 | 800 | 500 | 800 |
| reactor inlet | 503 | 811 | 501 | 808 | 505 | 798 | 502 | 795 |
| reactor outlet | 321 | 453 | 126 | 615 | 62 | 683 | 213 | 732 |

Referring to Table 1, it may be found that the SO₂ removal rate decreases as the temperature increases at 230°C or higher and as the temperature decreases at 190°C or lower. This is because as the temperature increases above 230°C, the ammonium bisulfate (NH₄HSO₄) production reaction rate decreases, and the reaction between NOₓ and NH₃ is rather activated and because at the temperature of 190°C or lower, as the temperature decreases, the rate of all reactions also decreases significantly.

### <Experimental Example 2: SO₂ removal rate change according to NH₃ input concentration change>

The experiment was carried out in the same manner as in Experimental Example 1, the concentration of NH₃ in the raw material mixed gas was changed from 500 ppm to 1,100 ppm, and the reaction temperature was fixed at 220°C during the experiment. The results are summarized in Table 2.

**[Table 2]**

| <Change of SO₂ removal rate according to NH₃ input concentration change> | | | | |
|---|---|---|---|---|
| gas type | NH₃ concentration (ppm) in raw material | | | |
| | 500 | 700 | 900 | 1100 |
| SO₂ | 295 | 157 | 5 | 0 |
| NOₓ | 706 | 685 | 576 | 471 |
| NH₃ | 202 | 242 | 185 | 273 |

Referring to Table 2, it may be found that at the reaction temperature of 220°C, if the concentration of NH₃ is maintained at 900 ppm (1.8 times of the SO₂ concentration) or higher, SO₂ is converted to 100% ammonium bisulfate (NH₄HSO₄) gas and removed.

### <Experimental Example 3: Change of SO₂ removal rate when an ammonium bisulfate synthesis catalyst is used>

The experiment was carried out in a state where 0.5 g of alumina in which 0.5 wt % of platinum was supported was charged into the reactor, and was compared with the case without catalyst charging. The concentration of NH₃ was changed from 600 ppm to 900 ppm, and other experimental conditions were applied in the same way as in Experimental Example 2. The experimental results are shown in Table 3 below.

**[Table 3]**

| <Change of SO₂ concentration when using ammonium bisulfate synthesis catalyst> | | | | |
|---|---|---|---|---|
| reaction method and concentration (ppm) | input NH₃ concentration (ppm) | | | |
| | 600 | 700 | 800 | 900 |
| non-catalyst reaction SO₂ concentration | 215 | 157 | 85 | 5 |
| catalyst reaction SO₂ concentration | 22 | 0 | 0 | 0 |

Referring to Table 3, it may be found that the SO₂ removal rate is improved when the experiment is performed in a state where the catalyst is charged into the reactor.

### <Experimental Example 4: Ammonium bisulfate removal rate according to water usage>

One aspect of the present disclosure is directed to inputting and reacting NH₃ to be converted into ammonium bisulfate (NH₄HSO₄) in order to remove SO₂ from the exhaust gas, and then dissolving it in water or seawater to be finally discharged and discharged in seawater. Therefore, it is very important to determine the amount of water for complete dissolution of ammonium bisulfate (NH₄HSO₄).

In Experimental Example 4, 0.5 g of alumina in which 0.5 wt% of platinum was supported was charged into the reactor, and reaction temperature was fixed at 220°C, and the experiment was conducted in the same way as in Experimental Example 1. After the experiment, the exhaust gas was allowed to pass through the water of the bubbler 16 filled with water, just before being discharged. The amount of water contained in the bubbler was adjusted, and the amount of ammonium bisulfate (NH₄HSO₄) dissolved in water was measured after the exhaust gas was passed for 10 hours. The results are summarized in Table 4.

**[Table 4]**

| <Ammonium bisulfate dissolution rate according to water usage> | | | | | |
|---|---|---|---|---|---|
| | amount of water in the bubbler (g) | | | | |
| | 15 | 30 | 50 | 100 | 150 |
| weight of NH₄HSO₄ after drying (g) | 0.101 | 0.146 | 0.154 | 0.154 | 0.154 |
| NH₄HSO₄ dissolution rate (%) | 65.6 | 94.8 | 100 | 100 | 100 |

Referring to Table 4, it may be found that the entire ammonium bisulfate in the exhaust gas is dissolved in water and removed when the amount of water inside the bubbler is about 300 times or greater than the amount of ammonium bisulfate (NH₄HSO₄) in the exhaust gas.

### <Experimental Example 5: NOₓ removal rate by SCR device>

A NOₓ SCR commercial catalyst (V₂O₅/TiO₂/WO₃) was charged into the reactor and the experiment was conducted in the same manner as in Experimental Example 1. For reference, the temperatures of the preheaters were all fixed at 210°C, and the temperature of the reactor in which the catalyst was charged was increased to 350°C, during the experiment. The concentrations of SO₂, NOₓ and NH₃ were measured at the reactor outlet while changing the concentration of NH₃ in the raw material mixed gas from 1,200 ppm to 2,000 ppm, and the results are summarized in Table 5.

**[Table 5]**

| < NOₓ removal effect according to NH₃ input amount> | | | | | |
|---|---|---|---|---|---|
| exhaust gas | NH₃ input amount (ppm) and NH₃/NOₓ ratio | | | | |
| | 1200 ppm | 1400 ppm | 1600 ppm | 1800 ppm | 2000 ppm |
| | 0.875 | 1.125 | 1.375 | 1.625 | 1.875 |
| NOₓ | 212 | 86 | 14 | 5 | 3 |
| SO₂ | 0 | 0 | 0 | 0 | 0 |
| NH₃ | 88 | 151 | 287 | 492 | 695 |

Referring to Table 5, when the SO₂ concentration is 500 ppm and the NOₓ concentration is 800 ppm in the raw material mixed gas, if the total amount of NH₃ input is 1,400 ppm or more, after passing the NOₓ SCR commercial catalyst, the SO₂ concentration becomes 0 ppm and the NOₓ concentration becomes 50 ppm, so it may be found that SO₂ removal rate becomes 100% and the NOₓ removal rate becomes 95% or more.

### [Reference Signs]

| | | | |
|---|---|---|---|
| 110: | sulfur dioxide removal device | 120: | wet scrubber |
| 130: | SCR device | 140: | ammonia supply device |

## Claims

1. A ship exhaust gas cleaning apparatus, comprising:
a sulfur dioxide removal device 110 configured to provide a space for inducing the reaction among ammonia (NH₃) and sulfur dioxide (SO₂) in the presence of steam (H₂O) and oxygen (O₂) and convert sulfur dioxide (SO₂) contained in a ship exhaust gas into ammonium bisulfate (NH₄HSO₄) by the reaction of sulfur dioxide (SO₂) and ammonia (NH₃);
a wet scrubber 120 configured to remove the ammonium bisulfate (NH₄HSO₄) generated by the sulfur dioxide removal device 110 by dissolving the ammonium bisulfate (NH₄HSO₄) in a feed water,
**characterized in that** it further comprises an SCR device 130 configured to reduce nitrogen oxide (NOₓ) contained in the ship exhaust gas to nitrogen (N₂) for the ship exhaust gas discharged from the sulfur dioxide removal device 110.

2. The ship exhaust gas cleaning apparatus according to claim 1,
wherein in the sulfur dioxide removal device 110, an ammonium bisulfate (NH₄HSO₄) production reaction is activated, and a nitrogen reduction reaction by the reaction of nitrogen oxide (NOₓ) and ammonia (NH₃) is suppressed.

3. The ship exhaust gas cleaning apparatus according to claim 1,
wherein the temperature inside the sulfur dioxide removal device 110 or the temperature of the ship exhaust gas introduced into the sulfur dioxide removal device 110 is 150-300°C.

4. The ship exhaust gas cleaning apparatus according to claim 1,
wherein ammonia (NH₃) is put into the sulfur dioxide removal device 110 in an amount of 1-2 times compared to the molar equivalent of the sulfur dioxide (SO₂) contained in the ship exhaust gas.

5. The ship exhaust gas cleaning apparatus according to claim 1,
wherein an ammonium bisulfate synthesis catalyst is charged into the sulfur dioxide removal device 110, and the ammonium bisulfate synthesis catalyst serves to promote the production of ammonium bisulfate (NH₄HSO₄).

6. The ship exhaust gas cleaning apparatus according to claim 5,
wherein the ammonium bisulfate synthesis catalyst is any one of an oxidation catalyst, a mixture of oxidation catalyst and solid acid, and a solid acid support of oxidation catalyst, or a mixture thereof.

7. The ship exhaust gas cleaning apparatus according to claim 6,
wherein the oxidation catalyst is any one of MnO₂, V₂O₅, Ni, Pd, and Pt, or a mixture thereof, and
wherein the solid acid is any one selected from the group consisting of basalt, granite, limestone, sandstone, shale, metamorphic rock, kaolinite, attapulgite, bentonite, montmorillonite, zeolite, zinc oxide (ZnO), aluminum oxide (Al₂O₃), titanium oxide (TiO₂), cesium oxide (CeO₂), vanadium oxide (V₂O₅), silicon oxide (SiO₂), chromium oxide (Cr₂O₃), calcium sulfate (CaSO₄), manganese sulfate (MnSO₄), nickel sulfate (NiSO₄), copper sulfate (CuSO₄), cobalt sulfate (CoSO₄), cadmium sulfate (CdSO₄), magnesium sulfate (MgSO₄), iron sulfate II (FeSO₄), aluminum sulfate (Al₂(SO₄)₃), calcium nitrate (Ca(NO₃)₂), zinc nitrate (Zn(NO₃)₂), iron nitrate III (Fe(NO₃)₃), aluminum phosphate (AlPO₄), iron phosphate III (FePO₄), chromium phosphate (CrPO₄), copper phosphate (Cu₃(PO₄)₂), zinc phosphate (Zn₃(PO₄)₄), magnesium phosphate (Mg₃(PO₄)₂), aluminum chloride (AlCl₃), titanium chloride (TiCl₄), calcium chloride (CaCl₂), calcium fluoride (CaF₂), barium fluoride (BaF₂) and calcium carbonate (CaCO₃), or a mixture thereof.

8. The ship exhaust gas cleaning apparatus according to claim 1,
wherein a substance to be dissolved by the wet scrubber 120 is ammonium bisulfate (NH₄HSO₄), and the feed water put into the wet scrubber 120 is in an amount of 100-2,000 times compared to the mass of ammonium bisulfate (NH₄HSO₄).

9. The ship exhaust gas cleaning apparatus according to claim 1,
wherein ammonia (NH₃) is put into the SCR device 130 as a reducing agent, and the ammonia (NH₃) is put in an amount of 0.7-1.5 times compared to the molar equivalent of nitrogen oxide (NOₓ) contained in the ship exhaust gas.

10. The ship exhaust gas cleaning apparatus according to claim 1,
wherein ammonia (NH₃) in an amount of 1-2 times compared to the molar equivalent of sulfur dioxide (SO₂) contained in the ship exhaust gas and ammonia (NH₃) in an amount of 0.7-1.5 times compared to the molar equivalent of nitrogen oxide (NOₓ) contained in the ship exhaust gas are put into the sulfur dioxide removal device 110.

11. A ship exhaust gas cleaning method, comprising:
a sulfur dioxide removing step of converting sulfur dioxide (SO₂) contained in a ship exhaust gas into ammonium bisulfate (NH₄HSO₄) by the reaction among sulfur dioxide (SO₂) and ammonia (NH₃) in the presence of steam (H₂O) and oxygen (O₂); and
an ammonium bisulfate removing step of removing the ammonium bisulfate (NH₄HSO₄) generated by the reaction of sulfur dioxide (SO₂) and ammonia (NH₃) by dissolving the ammonium bisulfate (NH₄HSO₄) in a feed water, wherein a nitrogen oxide removing step is performed between the sulfur dioxide removing step and the ammonium bisulfate removing step, and
wherein the nitrogen oxide removing step further includes a nitrogen oxide removing step of removing the nitrogen oxide (NOₓ) contained in the ship exhaust gas by reducing the nitrogen oxide (NOₓ) to nitrogen (N₂).

12. The ship exhaust gas cleaning method according to claim 11,
wherein in the sulfur dioxide removing step, an ammonium bisulfate (NH₄HSO₄) production reaction is activated, and a nitrogen reduction reaction by the reaction of nitrogen oxide (NOₓ) and ammonia (NH₃) is suppressed.

13. The ship exhaust gas cleaning method according to claim 11,
wherein in the sulfur dioxide removing step, a condition of controlling the temperature of the ship exhaust gas to 150-300°C, a condition of putting ammonia (NH₃) in an amount of 1-2 times compared to the molar equivalent of the sulfur dioxide (SO₂) contained in the ship exhaust gas, and a condition of charging an ammonium bisulfate synthesis catalyst are applied selectively or in combination to maximize ammonium bisulfate (NH₄HSO₄) synthesis efficiency.

14. The ship exhaust gas cleaning method according to claim 11,
wherein in the ammonium bisulfate removing step, the feed water is put in an amount of 100-2,000 times compared to the mass of ammonium bisulfate (NH₄HSO₄) to dissolve the ammonium bisulfate (NH₄HSO₄).

15. The ship exhaust gas cleaning method according to claim 11,
wherein the nitrogen oxide removing step is carried out by a SCR device 130, and
wherein a condition of controlling the temperature of the ship exhaust gas or the temperature of the inside of the SCR device 130 to 200-450°C and a condition of putting ammonia (NH₃) in an amount of 0.7-1.5 times compared to the molar equivalent of nitrogen oxide (NOₓ) contained in the ship exhaust gas are applied selectively or in combination.

16. The ship exhaust gas cleaning method according to claim 11,
wherein in the sulfur dioxide removing step, ammonia (NH₃) in an amount of 1-2 times compared to the molar equivalent of sulfur dioxide (SO₂) contained in the ship exhaust gas and ammonia (NH₃) in an amount of 0.7-1.5 times compared to the molar equivalent of nitrogen oxide (NOₓ) contained in the ship exhaust gas are put into a sulfur dioxide removal device 110.

## Patentansprüche

1. Schiffsabgasreinigungsvorrichtung, umfassend:
eine Schwefeldioxidentfernungsvorrichtung 110, die dazu konfiguriert ist, einen Raum zum Auslösen der Reaktion zwischen Ammoniak (NH₃) und Schwefeldioxid (SO₂) in der Anwesenheit von Dampf (H₂O) und Sauerstoff (O₂) bereitzustellen und in einem Schiffsabgas enthaltenes Schwefeldioxid (SO₂) durch die Reaktion von Schwefeldioxid (SO₂) und Ammoniak (NH₃) in Ammoniumbisulfat (NH₄HSO₄) umzuwandeln;
einen Nasswäscher 120, der dazu konfiguriert ist, das durch die Schwefeldioxidentfernungsvorrichtung 110 erzeugte Ammoniumbisulfat (NH₄HSO₄) durch Auflösen des Ammoniumbisulfats (NH₄HSO₄) in einem Speisewasser zu entfernen,
**dadurch gekennzeichnet, dass** sie ferner eine SCR-Vorrichtung 130 umfasst, die dazu konfiguriert ist, für das von der Schwefeldioxidentfernungsvorrichtung 110 abgeführte Schiffsabgas in dem Schiffsabgas enthaltenes Stickstoffoxid (NOₓ) zu Stickstoff (N₂) zu reduzieren.

2. Schiffsabgasreinigungsvorrichtung nach Anspruch 1,
wobei in der Schwefeldioxidentfernungsvorrichtung 110 eine Ammoniumbisulfat (NH₄HSO₄)-Herstellungsreaktion aktiviert wird, und eine Stickstoffreduktionsreaktion durch die Reaktion von Stickstoffoxid (NOₓ) und Ammoniak (NH₃) unterdrückt wird.

3. Schiffsabgasreinigungsvorrichtung nach Anspruch 1,
wobei die Temperatur innen in der Schwefeldioxidentfernungsvorrichtung 110 oder die Temperatur des in die Schwefeldioxidentfernungsvorrichtung 110 eingeführten Schiffsabgases 150-300°C ist.

4. Schiffsabgasreinigungsvorrichtung nach Anspruch 1,
wobei Ammoniak (NH₃) in die Schwefeldioxidentfernungsvorrichtung 110 in einem Betrag des 1 - 2-Fachen verglichen mit dem Molaräquivalent des in dem Schiffsabgas enthaltenen Schwefeldioxids (SO₂) gegeben wird.

5. Schiffsabgasreinigungsvorrichtung nach Anspruch 1,
wobei ein Ammoniumbisulfat-Synthese-Katalysator in die Schwefeldioxidentfernungsvorrichtung 110 geladen wird, und der Ammoniumbisulfat-Synthese-Katalysator dazu dient, die Produktion von Ammoniumbisulfat (NH₄HSO₄) zu fördern.

6. Schiffsabgasreinigungsvorrichtung nach Anspruch 5,
wobei der Ammoniumbisulfat-Synthese-Katalysator einer von einem Oxidationskatalysator, einer Mischung aus einem Oxidationskatalysator und einer festen Säure, und einem Festsäureträger eines Oxidationskatalysators, oder eine Mischung davon ist.

7. Schiffsabgasreinigungsvorrichtung nach Anspruch 6,
wobei der Oxidationskatalysator einer von MnOz, V₂O₅, Ni, Pd und Pt, oder eine Mischung davon, ist, und
wobei die feste Säure eine ist, die aus einer Gruppe ausgewählt ist, die aus Basalt, Granit, Kalkstein, Sandstein, Schiefer, metamorphem Gestein, Kaolinit, Attapulgit, Bentonit, Montmorillonit, Zeolit, Zinkoxid (ZnO), Aluminiumoxid (Al₂O₃), Titanoxid (TiO₂), Cäsiumoxid (CeO₂), Vanadiumoxid (V₂O₅), Siliziumoxid (SiO₂), Chromoxid (Cr₂O₃), Kalziumsulfat (CaSO₄), Mangansulfat (MnSO₄), Nickelsulfat (NiSO₄), Kupfersulfat (CuSO₄), Kobaltsulfat (CoSO₄), Kadmiumsulfat (CdSO₄), Magnesiumsulfat (MgSO₄), Eisensulfat II (FeSO₄), Aluminiumsulfat (Al₂(SO₄)₃), Kalziumnitrat (Ca(NO₃)₂), Zinknitrat (Zn(NO₃)₂), Eisennitrat III (Fe(NO₃)₃), Aluminiumphosphat (AlPO₄), Eisenphosphat III (FePO₄), Chromphosphat (CrPO₄), Kupferphosphat (Cu₃(PO₄)₂), Zinkphosphat (Zn₃(PO₄)₄), Magnesiumphosphat (Mg₃(PO₄)₂), Aluminiumchlorid (AlCl₃), Titanchlorid (TiCl₄), Kalziumchlorid (CaCl₂), Kalziumfluorid (CaF₂), Bariumfluorid (BaF₂) und Kalziumkarbonat (CaCO₃), oder einer Mischung davon besteht.

8. Schiffsabgasreinigungsvorrichtung nach Anspruch 1,
wobei eine durch den Nasswäscher 120 aufzulösende Substanz Ammoniumbisulfat (NH₄HSO₄) ist, und das in den Nasswäscher 120 gegebene Speisewasser in einem Betrag des 100 - 2000-Fachen verglichen mit der Masse von Ammoniumbisulfat (NH₄HSO₄) ist.

9. Schiffsabgasreinigungsvorrichtung nach Anspruch 1,
wobei Ammoniak (NH₃) als ein Reduktionsmittel in die SCR-Vorrichtung 130 gegeben wird, und das Ammoniak (NH₃) in einem Betrag des 0,7 - 1,5-Fachen verglichen mit dem Molaräquivalent von in dem Schiffsabgas enthaltenem Stickstoffoxid (NOₓ) gegeben wird.

10. Schiffsabgasreinigungsvorrichtung nach Anspruch 1,
wobei Ammoniak (NH₃) in einem Betrag des 1 - 2-Fachen verglichen mit dem Molaräquivalent von in dem Schiffsabgas enthaltenem Schwefeldioxid (SOz) und Ammoniak (NH₃) in einem Betrag des 0,7 - 1,5-Fachen verglichen mit dem Molaräquivalent von in dem Schiffsabgas enthaltenem Stickstoffoxid (NOₓ) in die Schwefeldioxidentfernungsvorrichtung 110 gegeben wird.

11. Schiffsabgasreinigungsverfahren umfassend:
einen Schwefeldioxidentfernungsschritt zum Umwandeln von in einem Schiffsabgas enthaltenem Schwefeldioxid (SOz) in Ammoniumbisulfat (NH₄HSO₄) durch die Reaktion zwischen Schwefeldioxid (SOz) und Ammoniak (NH₃) in der Anwesenheit von Dampf (H₂O) und Sauerstoff (O₂); und
einen Ammoniumbisulfatentfernungsschritt zum Entfernen des durch die Reaktion von Schwefeldioxid (SOz) und Ammoniak (NH₃) erzeugten Ammoniumbisulfats (NH₄HSO₄) durch Auflösen des Ammoniumbisulfats (NH₄HSO₄) in einem Speisewasser, wobei ein Stickstoffoxidentfernungsschritt zwischen dem Schwefeldioxidentfernungsschritt und dem Ammoniumbisulfatentfernungsschritt durchgeführt wird, und
wobei der Stickstoffoxidentfernungsschritt ferner einen Stickstoffoxidentfernungsschritt zum Entfernen des in dem Schiffsabgas enthaltenen Stickstoffoxids (NOₓ) durch Reduzieren des Stickstoffoxids (NOₓ) zu Stickstoff (N₂) umfasst.

12. Schiffsabgasreinigungsverfahren nach Anspruch 11,
wobei in dem Schwefeldioxidentfernungsschritt eine Ammoniumbisulfat (NH₄HSO₄)-Herstellungsreaktion aktiviert wird, und eine Stickstoffreduktionsreaktion durch die Reaktion von Stickstoffoxid (NOₓ) und Ammoniak (NH₃) unterdrückt wird.

13. Schiffsabgasreinigungsverfahren nach Anspruch 11,
wobei in dem Schwefeldioxidentfernungsschritt eine Bedingung eines Steuerns der Temperatur des Schiffsabgases auf 150-300°C, eine Bedingung eines Gebens von Ammoniak (NH₃) in einem Betrag des 1 - 2-Fachen verglichen mit dem Molaräquivalent des in dem Schiffsabgas enthaltenen Schwefeldioxids (SOz), und eine Bedingung eines Ladens eines Ammoniumbisulfat-Synthese-Katalysators selektiv oder in Kombination angewandt werden, um die Effizienz einer Ammoniumbisulfat (NH₄HSO₄)-Synthese zu maximieren.

14. Schiffsabgasreinigungsverfahren nach Anspruch 11,
wobei in dem Ammoniumbisulfatentfernungsschritt das Speisewasser in einem Betrag des 100 - 2000-Fachen verglichen mit der Masse von Ammoniumbisulfat (NH₄HSO₄) gegeben wird, um das Ammoniumbisulfat (NH₄HSO₄) aufzulösen.

15. Schiffsabgasreinigungsverfahren nach Anspruch 11,
wobei der Stickstoffoxidentfernungsschritt durch eine SCR-Vorrichtung 130 ausgeführt wird, und
wobei eine Bedingung eines Steuerns der Temperatur des Schiffsabgases oder der Temperatur des Inneren der SCR-Vorrichtung 130 auf 200-450°C und eine Bedingung eines Gebens von Ammoniak (NH₃) in einem Betrag des 0,7 - 1,5-Fachen verglichen mit dem Molaräquivalent von in dem Schiffsabgas enthaltenem Stickstoffoxid (NOₓ) selektiv oder in Kombination angewandt werden.

16. Schiffsabgasreinigungsverfahren nach Anspruch 11,
wobei in dem Schwefeldioxidentfernungsschritt Ammoniak (NH₃) in einem Betrag des 1 - 2-Fachen verglichen mit dem Molaräquivalent von in dem Schiffsabgas enthaltenem Schwefeldioxid (SOz) und Ammoniak (NH₃) in einem Betrag eines 0,7- bis 1,5-Fachen verglichen mit dem Molaräquivalent von in dem Schiffsabgas enthaltenem Stickstoffoxid (NOₓ) in eine Schwefeldioxidentfernungsvorrichtung 110 gegeben wird.

## Revendications

1. Appareil de nettoyage des gaz d'échappement d'un navire, comprenant :
un dispositif d'élimination du dioxyde de soufre 110 configuré pour fournir un espace pour induire la réaction entre l'ammoniac (NH₃) et le dioxyde de soufre (SO₂) en présence de vapeur (H₂O) et d'oxygène (O₂) et convertir le dioxyde de soufre (SO₂) contenu dans les gaz d'échappement d'un navire en bisulfate d'ammonium (NH₄HSO₄) par la réaction entre le dioxyde de soufre (SO₂) et l'ammoniac (NH₃) ;
un épurateur humide 120 configuré pour éliminer le bisulfate d'ammonium (NH₄HSO₄) généré par le dispositif d'élimination du dioxyde de soufre 110 en dissolvant le bisulfate d'ammonium (NH4HSO4) dans une eau d'alimentation,
**caractérisé en ce qu'**il comprend en outre un dispositif SCR 130 configuré pour réduire de l'oxyde d'azote (NOₓ) contenu dans les gaz d'échappement du navire en azote (N₂) pour les gaz d'échappement du navire déchargés du dispositif d'élimination du dioxyde de soufre 110.

2. Appareil de nettoyage des gaz d'échappement d'un navire selon la revendication 1,
dans lequel, dans le dispositif d'élimination du dioxyde de soufre 110, une réaction de production de bisulfate d'ammonium (NH₄HSO₄) est activée et une réaction de réduction de l'azote (NH4HSO4) par la réaction de l'oxyde d'azote (NOₓ) et de l'ammoniac (NH₃) est supprimée.

3. Appareil de nettoyage des gaz d'échappement d'un navire selon la revendication 1,
dans lequel la température à l'intérieur du dispositif d'élimination du dioxyde de soufre 110 ou la température du gaz d'échappement du navire introduit dans le dispositif d'élimination du dioxyde de soufre 110 est comprise entre 150 à 300°C.

4. Appareil de nettoyage des gaz d'échappement d'un navire selon la revendication 1,
dans lequel l'ammoniac (NH₃) est introduit dans le dispositif d'élimination du dioxyde de soufre 110 dans une quantité de 1 à 2 fois l'équivalent molaire du dioxyde de soufre (SO₂) contenu dans les gaz d'échappement du navire.

5. Appareil de nettoyage des gaz d'échappement d'un navire selon la revendication 1,
dans lequel un catalyseur de synthèse de bisulfate d'ammonium est chargé dans le dispositif d'élimination du dioxyde de soufre 110, et le catalyseur de synthèse de bisulfate d'ammonium sert à promouvoir la production de bisulfate d'ammonium (NH₄HSO₄).

6. Appareil de nettoyage des gaz d'échappement d'un navire selon la revendication 5,
dans lequel le catalyseur de synthèse de bisulfate d'ammonium est un catalyseur d'oxydation, un mélange de catalyseur d'oxydation et d'acide solide, un support acide solide de catalyseur d'oxydation ou un mélange de ceux-ci.

7. Appareil de nettoyage des gaz d'échappement d'un navire selon la revendication 6,
dans lequel le catalyseur d'oxydation est l'un des catalyseurs suivants : MnO₂, V₂O₅, Ni, Pd et Pt, ou un mélange de ceux-ci, et
dans lequel l'acide solide est l'un quelconque choisi dans le groupe comprenant le basalte, le granit, le calcaire, le grès, le schiste, la roche métamorphique, la kaolinite, l'attapulgite, la bentonite, la montmorillonite, zéolite, oxyde de zinc (ZnO), oxyde d'aluminium (Al₂O₃), oxyde de titane (TiO₂), oxyde de césium (CeO₂), oxyde de vanadium (V₂O₅), oxyde de silicium (SiO₂), oxyde de chrome (Cr₂O₃), sulfate de calcium (CaSO₄), sulfate de manganèse (MnSO₄), sulfate de nickel (NiSO₄), sulfate de cuivre (CuSO₄), sulfate de cobalt (CoSO₄), sulfate de cadmium (CdSO₄), sulfate de magnésium (MgSO₄), sulfate de fer Il (FeSO₄), sulfate d'aluminium (Al₂(SO₄)₃), nitrate de calcium (Ca(NO₃)₂), nitrate de zinc (Zn(NO₃)₂), nitrate de fer III (Fe(NO₃)₃), phosphate d'aluminium (AlPO₄), phosphate de fer III (FePO₄), phosphate de chrome (CrPO₄), phosphate de cuivre (Cu₃(PO₄)₂), phosphate de zinc (Zn₃(PO₄)₄), phosphate de magnésium (Mg₃(PO₄)₂), chlorure d'aluminium (AlCl₃), chlorure de titane (TiCl₄), chlorure de calcium (CaCl₂), fluorure de calcium (CaF₂), fluorure de baryum (BaF₂) et carbonate de calcium (CaCO₃), ou un mélange de ceux-ci.

8. Appareil de nettoyage des gaz d'échappement d'un navire selon la revendication 1,
dans lequel une substance à dissoudre par l'épurateur humide 120 est le bisulfate d'ammonium (NH₄HSO₄), et l'eau d'alimentation introduite dans l'épurateur humide 120 est dans une quantité 100 à 2 000 fois la masse de bisulfate d'ammonium (NH₄HSO₄).

9. Appareil de nettoyage des gaz d'échappement d'un navire selon la revendication 1,
dans lequel l'ammoniac (NH₃) est introduit dans le dispositif SCR 130 comme agent réducteur, et l'ammoniac (NH₃) est introduit en quantité de 0,7 à 1,5 fois par rapport à l'équivalent molaire de l'oxyde d'azote (NOₓ) contenu dans les gaz d'échappement du navire.

10. Appareil de nettoyage des gaz d'échappement d'un navire selon la revendication 1,
dans lequel l'ammoniac (NH₃) en quantité de 1 à 2 fois l'équivalent molaire du dioxyde de soufre (SO₂) contenu dans les gaz d'échappement du navire et de l'ammoniac (NH₃) en quantité de 0,7 à 1,5 fois l'équivalent molaire de l'oxyde d'azote (NOₓ) contenu dans les gaz d'échappement du navire sont introduits dans le dispositif d'élimination du dioxyde de soufre 110.

11. Procédé de nettoyage des gaz d'échappement d'un navire, comprenant :
une étape d'élimination du dioxyde de soufre pour convertir le dioxyde de soufre (SO₂) contenu dans les gaz d'échappement du navire en bisulfate d'ammonium (NH₄HSO₄) par la réaction entre le dioxyde de soufre (SO₂) et l'ammoniac (NH₃) en présence de vapeur (H₂O) et d'oxygène (0₂) ; et
une étape d'élimination du bisulfate d'ammonium pour éliminer le bisulfate d'ammonium (NH₄HSO₄) généré par la réaction entre le dioxyde de soufre (SO₂) et l'ammoniac (NH₃) en dissolvant le bisulfate d'ammonium (NH₄HSO₄) dans l'eau d'alimentation, selon lequel une étape d'élimination de l'oxyde d'azote est réalisée entre l'étape d'élimination du dioxyde de soufre et l'étape d'élimination du bisulfate d'ammonium, et
selon lequel d'élimination de l'oxyde d'azote comprend en outre une étape d'élimination de l'oxyde d'azote (NOₓ) contenu dans les gaz d'échappement du navire en réduisant l'oxyde d'azote (NOₓ) en azote (N₂).

12. Procédé de nettoyage des gaz d'échappement d'un navire selon la revendication 11,
dans lequel, lors de l'étape d'élimination du dioxyde de soufre, une réaction de production de bisulfate d'ammonium (NH₄HSO₄) est activée, et une réaction de réduction de l'azote par la réaction de l'oxyde d'azote (NOₓ) et de l'ammoniac (NH₃) est supprimée.

13. Procédé de nettoyage des gaz d'échappement d'un navire selon la revendication 11,
selon lequel, lors de l'étape d'élimination du dioxyde de soufre, une condition de contrôle de la température des gaz d'échappement du navire réglée à 150-300°C, une condition d'ajout de l'ammoniac (NH₃) dans une quantité de 1 à 2 fois l'équivalent molaire du dioxyde de soufre (SO₂) contenu dans les gaz d'échappement du navire, et une condition de chargement d'un catalyseur de synthèse de bisulfate d'ammonium sont appliquées de manière sélective ou en combinaison pour maximiser l'efficacité de la synthèse du bisulfate d'ammonium (NH₄HSO₄).

14. Procédé de nettoyage des gaz d'échappement d'un navire selon la revendication 11,
selon lequel, lors de l'étape d'élimination du bisulfate d'ammonium, l'eau d'alimentation est ajoutée dans une quantité de 100 à 2 000 fois la masse de bisulfate d'ammonium (NH₄HSO₄) pour dissoudre le bisulfate d'ammonium (NH₄HSO₄).

15. Procédé de nettoyage des gaz d'échappement d'un navire selon la revendication 11,
selon lequel l'étape d'élimination de l'oxyde d'azote est effectuée par un dispositif SCR 130, et
selon lequel une condition de contrôler la température des gaz d'échappement de navire ou la température de l'intérieur du dispositif SCR 130 à 200-450°C et une condition de mise en place d'ammoniac (NH₃) dans une quantité de 0,7-1,5 fois l'équivalent molaire de l'oxyde d'azote (NOₓ) contenu dans le gaz d'échappement du navire sont appliquées de manière sélective ou en combinaison.

16. Procédé de nettoyage des gaz d'échappement d'un navire selon la revendication 11,
selon lequel, lors de l'étape d'élimination du dioxyde de soufre, l'ammoniac (NH₃) est multiplié par 1 à 2 par rapport à l'équivalent molaire du dioxyde de soufre (SO₂) contenu dans les gaz d'échappement du navire et de l'ammoniac (NH₃) dans une quantité de 0,7 à 1,5 fois l'équivalent molaire de l'oxyde d'azote (NOₓ) contenu dans les gaz d'échappement du navire sont introduits dans un dispositif d'élimination du dioxyde de soufre 110.
